# EUROPEAN PATENT SPECIFICATION

(11) **EP 2 258 652 B1**
(45) Date of publication and mention of the grant of the patent: **19.06.2013**
(21) Application number: 10005505.2
(22) Date of filing: 27.05.2010
(51) Int. Cl.: B62B 3/06, B65B 11/02, B66F 9/075, B66F 9/06

(54) **Improved pallet truck**
Verbesserter Gabelstapler
Transpalette amélioré

(30) Priority: 01.06.2009 ES 200900965 U
(43) Date of publication of application: 08.12.2010
(73) Proprietor: Aranguren Comercial del Embalaje SL, 46019 Valencia (ES)
(72) Inventor: Sergio Llopis Soñés, 46612 Corbera (ES)
(74) Representative: Soler Lerma, Santiago

(56) References cited:
- EP-A1- 0 329 504
- FR-A1- 2 606 765
- US-B1- 6 732 871

## Description

The present invention relates to a pallet truck according to the preamble of claim 1, which has been provided with additional power supply elements that together with other means incorporated in it improve its stability, such that its improved stability and the incorporation of power supply elements make it possible to connect, with corresponding connections, functional elements that require electrical power supply, such as a wrapping device.

The field of the art to which it belongs is that of transportation machinery.

### BACKGROUND

Machines known as pallet trucks are very useful for transporting and handling packages and palletised loads.

These execute a vertical motion to raise the load slightly above the floor, to allow transporting it, and a translation motion of the pallet truck itself.

Both the vertical and the translation motion can be powered by the operator or by electric motors.

Due to their ease of handling, pallet trucks are widely used in which the displacement is powered by an electric motor. However, all other functions, particularly lifting the load, are not powered by a motor and require an exertion by the user. The reason for this is to reduce the size of the machine and allow using it in small storage spaces.

The need not to increase the size of the machine has led to discarding the possibility of adding functional elements requiring electric power, as this would require additional power supplies.

In addition, as this type of pallet trucks are designed to support the load at a very low height, barely above the floor, their stability will be compromised if a functional element is added that rises or moves, such as a wrapping device.

In this sense, it must be remarked that the body of the pallet truck generally rests on a single central wheel, or in many cases on a pair of centred wheels that do not generate a sufficiently large base.
A pallet truck according to the preamble of claim 1 is known from FR 2 606 765.

### DESCRIPTION OF THE INVENTION

To overcome the aforementioned drawbacks, a pallet truck has been developed including means that provide it with stability and power supply means.

For this purpose, a structure has been developed that reinforces the body of the pallet truck without altering its basic elements, and acts as a support for two additional wheels that increase the support base.

On another hand, the structure of the pallet truck itself has been used to develop an element in the form of panniers that allow incorporating additional batteries, and which due to their weight and their low position help to increase the stability of the pallet truck, particularly in absence of a load.

In addition to these improvements, a wrapping device has been incorporated of the type comprising two inverted L-shape arms, wherein the outer one is fixed and the inner one can rotate, and is provided with a reel carriage that supplies and tenses the wrapping material.

The additional wheels, necessarily robust, are mounted on the rear part of the pallet truck on the sides of the drive wheel and are able to turn freely.

The structure on which these two wheels are mounted is independent of the support elements of the pallet truck, so that during the load lifting or lowering operations these wheels remain still, without changing their support conditions on the floor.

To do so, the structure is defined by an arc that essentially spans the width of the pallet truck formed by two brackets, each of which is attached to one of the sides of the lifting piston and each of which supports one of the side wheels.

These arcs can be reinforced by a double arc parallel to the one described above.

The wheels are mounted on these arcs, although to increase robustness a series of reinforcement parts have been included.

Joining the bottom ends of the aforementioned arcs and in a horizontal disposition is a peripheral skirt that provides protection and prevents the wheels or the pallet truck itself from trapping an undesired object in its motion.

At a higher position, on the piston used to lift or lower the load a pannier-like element is disposed that falls on both sides of said piston. These panniers allow housing an additional battery on each of their sides.

The additional batteries allow connecting the pallet truck to a functional element that requires an electric power supply, such as a wrapping device, and due to their weight and their low position with respect to the floor help to increase the stability of the assembly.

The upper central part or bridge of this pannier assembly is provided with means that allow attaching a functional device, such as a wrapping device.

### BRIEF DESCRIPTION OF THE DRAWINGS

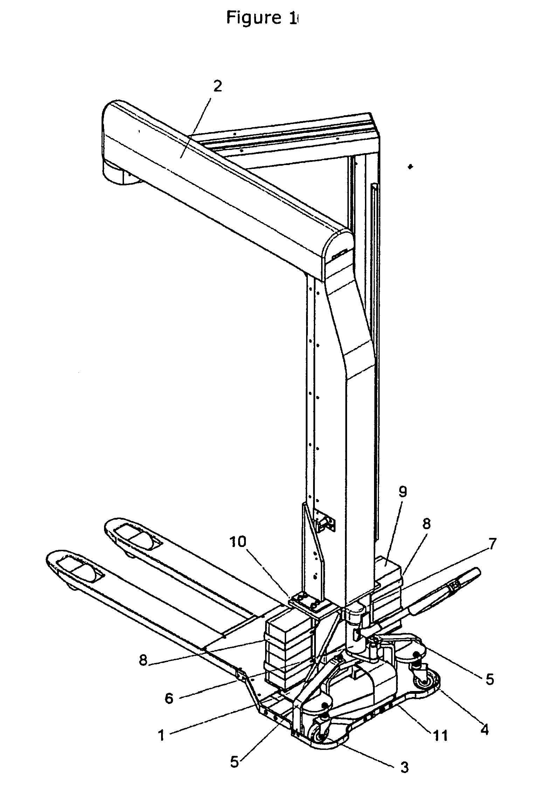

FIGURE 1 shows a rear view of the pallet truck (1) omitting in it the drive wheel for greater clarity, with the wrapping device (2) connected to it, showing the rear side free wheels (3) and (4) mounted on an arc divided into two sectors (5) attached to the base of the lifting piston (6) on which rests the body of the pallet truck (7), on which body in turn rests the pannier (8) part allowing to house a battery on each side (9), with the wrapping device (2) being attached to the bridge (10).

This figure also shows the peripheral skirt (11) that protects the side wheels.

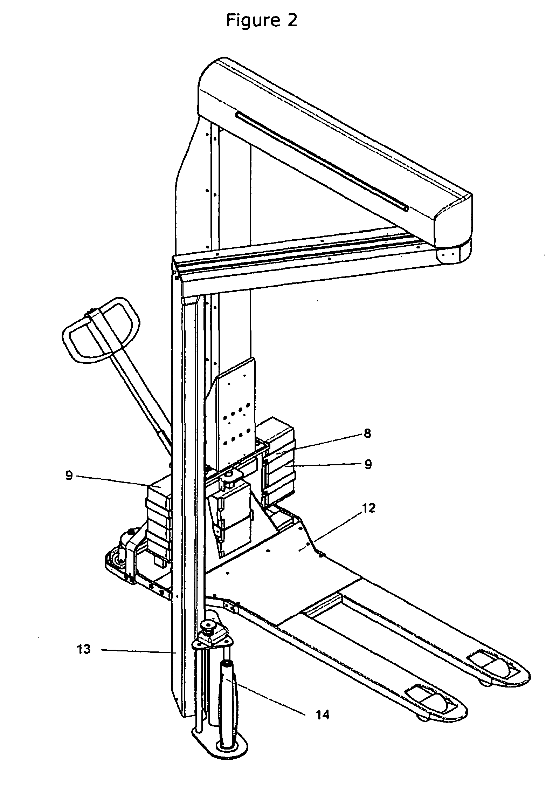

FIGURE 2 shows a front view of the pallet truck with the wrapping device that clearly shows the part in the form of a pannier (8) with the additional batteries (9) inserted and the union between the supporting elements of the pallet truck that generates a platform (12) with a size appropriate so that it span allows crossing the vertical rotating arm of the wrapping device (13) with the reel carriage (14)

### DESCRIPTION OF AN EMBODIMENT OF THE INVENTION

An embodiment of the invention is described below in a manner that does not limit its object.

The present invention, as indicated by its name, consists of an improved pallet truck that has been provided with elements for stability, safety and electrical power supply, all of this in order to mount on it a functional element such as a wrapping device.

As regards stability, on its rear part, mounted on an arc-shaped support joined to the base of the lifting piston and therefore independent of the pallet truck body, on each side free wheels have been fitted, these wheels and the drive wheel being peripherally surrounded by a safety skirt or guard.

These wheels remain in constant contact with the floor, as they are not connected to the pallet fork body.

The pallet truck body rests on the top part of the piston, so that it is subject to its action, while both the drive wheel and the lateral stability wheels are joined to the base of the piston, and are therefore not subject to its action.

Mounted on the pallet fork chassis is a pannier-shaped element that can house two additional batteries which, as well as providing electric power supply, increase the stability of the assembly due to their weight and their low position.

The top part of these panniers consists of a bridge part that comprises means, orifices and anchorings that allow attaching a wrapping device, preferably of the type described in patent P200802243, although the fixed vertical element must be shortened to adjust to the height of the pallet fork body.

The wrapping device is attached to this element and electrically connected to the supply batteries.

The pallet truck support elements, which are the extensions that are inserted in the base of the pallets, are at least partially joined.

The union can be established by a bridge part that joins them at a specified point or by a laminar part which joins them and also creates a surface.

In both cases, this union element will also act as a stop so that the pallet placed on the pallet truck is at a distance from the body of the pallet truck allowing to carry out the wrapping functions; particularly, between the pallet and the pallet truck body there must be enough space to allow the rotating vertical arm of the wrapping device to pass across the reel carriage and the reel.

As the pallet truck is a mobile element, the difference in width between the support elements of the pallet truck and its body is solved by guards which, due to their diagonal position with respect to the pallet truck, push away any elements that it may encounter in its path.

## Claims

1. PALLET TRUCK (1) whose movement is driven by a motor, comprising:
the pallet truck itself, which essentially comprises support elements, a motor, a drive wheel, a steering arm and lever and a load lifting mechanism;
a stabilisation structure independent of the body (2) of the pallet truck and joined to it only at the area near the base of the lifting piston (6), this structure being formed by at least an upper arc, side wheels (3,4) attached to this arc and **characterised by** a peripheral guard skirt (11) close to the floor; and
a pannier element (8) attached to the area of the pallet truck body that rests on the lifting piston, this element having two lateral spaces allowing housing two batteries (9) and an upper central element or bridge (10) that includes means for attaching a functional element, all of this made of a sufficiently strong material.

2. PALLET TRUCK according to claim 1, **characterised in that** joined to the upper part of the pannier element is placed a wrapping device of the type comprising two inverted L-shaped arms, the external one (2) being fixed and the internal one (13) rotary, which in its vertical segment is provided with a reel carriage (14) that supplies and tenses the wrapping material, this element being connected by electrical connections with the power supplies provided in the pallet truck.

3. PALLET TRUCK according to claim 1, **characterised in that** the support elements are partially joined by a laminar part that generates a flat surface.

4. PALLET TRUCK according to claim 1, **characterised in that** the support elements are joined to each other at the area closest to the body of the pallet fork.

5. PALLET FORK according to any of the previous claims, **characterised in that** it incorporates power supply elements such as batteries (9) for powering an accessory element.

6. PALLET FORK according to claim 1, **characterised in that** there is a guard that spans the difference in width between the support elements of the pallet fork and its body.

## Patentansprüche

1. PALETTENWAGEN (1), dessen Bewegungen durch einen Motor angetrieben sind, der folgende Elemente umfasst:
• den Palettenwagen selbst; im Wesentlichen umfasst er Trageelemente, einen Motor, ein Antriebsrad, einen Steuerarm, einen Hebel und einen Hebemechanismus für Lasten;
• eine vom Gehäuse (2) des Palettenwagens unabhängige Stabilisierungsstruktur, die nur im Bereich am Fuß des Hebekolbens (6) mit dem Wagen verbunden ist, wobei diese Struktur mindestens von einem oberen Bogen (5) und an diesem Bogen seitlich befestigten Rädern (3,4) gebildet wird, die sich durch eine dicht am Boden angebrachte Schutzschürze (11) auszeichnen; und
• ein Korbelement (8), befestigt an jenem Bereich des Palettenwagens, der auf dem Hebekolben ruht, wobei dieses Element zwei seitlich angebrachte Räume zur Unterbringung zweier Batterien (9) besitzt, sowie ein oberes zentrales Element oder Brücke (10), die Mittel zur Befestigung eines funktionellen Elements umfasst, wobei alle Bauteile aus einem hinreichend festen Material gefertigt sind.

2. PALETTENWAGEN nach Anspruch 1, **dadurch gekennzeichnet, dass** am oberen Teil des Korbelements eine Verpackungsvorrichtung angebracht ist, die zwei Arme der Form eines umgekehrten "L" besitzt, wobei der äußere Arm (2) befestigt ist, der innere Arm (13) jedoch drehbar gelagert und in seinem vertikalen Abschnitt mit einen Spulenträger (14) ausgestattet ist, der das Verpackungsmaterial zuführt und spannt, wobei das letztere Element über elektrische Anschlüsse mit der Stromversorgung des Palettenwagens verbunden ist.

3. PALETTENWAGEN nach Anspruch 1, **dadurch gekennzeichnet, dass** die Trageelemente teilweise über einen geschichteten (laminaren) Abschnitt verbunden sind, der eine flache Oberfläche herstellt.

4. PALETTENWAGEN nach Anspruch 1, **dadurch gekennzeichnet, dass** die Trageelemente in jenen Bereichen miteinander verbunden sind, die dem Gehäuse der Palettenwagen am nächsten liegen.

5. PALETTENWAGEN nach einem der vorherigen Ansprüche, **dadurch gekennzeichnet, dass** sie Elemente der Stromversorgung wie Batterien (9) umfasst, die elektrischen Strom an ein Zusatzelement liefern.

6. PALETTENWAGEN nach Anspruch 1, **dadurch gekennzeichnet, dass** sie über eine Schutzvorrichtung verfügt, die den Breitenunterschied zwischen den Trageelementen und dem Gehäuse der Palettenwagen überbrückt.

## Revendications

1. TRANSPALETTE (1) dont le mouvement est effectué par un moteur comprenant:
• le propre transpalette, qui comprend essentiellement des éléments de support, un moteur, une roue motrice, un bras de direction, un levier et un mécanisme de levage de charge;
• ne structure de stabilisation indépendante du corps (2) du transpalette et reliée à celui-ci seulement au niveau de la zone proche de la base du piston de levage (6), cette structure étant constituée par au moins un arc supérieur (5), des roues latérales (3,4) fixées à cet arc et **caractérisées par** une jupe de protection périphérique (11) proche du sol ; et
• un élément de sacoche (8) fixé à la zone du corps de transpalette qui repose sur le piston de levage, cet élément ayant deux espaces latéraux permettant de loger deux batteries (9) et un élément central supérieur ou pont (10) qui comporte des moyens pour fixer un élément fonctionnel, tout ceci étant réalisé en une matière suffisamment solide.

2. TRANSPALETTE selon la revendication 1, **caractérisé en ce que** relié à la partie supérieure de l'élément de sacoche est mis en place un dispositif d'emballage du type comprenant deux bras sous forme de L renversé, le bras extérieur (2) étant fixe et le bras intérieur (13) étant rotatif, lequel dans son segment vertical est pourvu d'un chariot à bobine (14) qui fournit et tend la matière d'emballage, cet élément étant connecté par des connexions électriques à des sources d'alimentation prévues sur le transpalette.

3. TRANSPALETTE selon la revendication 1, **caractérisé en ce que** les éléments de support sont reliés par une partie laminaire qui génère une surface plane.

4. TRANSPALETTE selon la revendication 1, **caractérisé en ce que** les éléments de support sont reliés entre eux au niveau de la zone la plus proche du corps de la fourche à transpalette.

5. TRANSPALETTE selon l'une quelconque des revendications précédentes, **caractérisé en ce qu'**il incorpore des éléments de source d'alimentation tels que des batteries (9) pour alimenter un élément accessoire.

6. TRANSPALETTE selon la revendication 1, **caractérisé en ce qu'**il y a une protection qui couvre la différence de largeur entre les éléments de support de la fourche à transpalette et son corps.
